# EUROPÄISCHE PATENTSCHRIFT

(11) **EP 2 574 421 B1**
(45) Veröffentlichungstag und Bekanntmachung des Hinweises auf die Patenterteilung: **24.05.2017**
(21) Anmeldenummer: 11007853.2
(22) Anmeldetag: 28.09.2011
(51) Int. Cl.: B21D 43/02, B21D 43/14, B21D 51/26, B23Q 39/04, B23P 21/00

(54) **BEARBEITUNGSVORRICHTUNG**
PROCESSING DEVICE
DISPOSITIF DE TRAITEMENT

(43) Veröffentlichungstag der Anmeldung: 03.04.2013
(73) Patentinhaber: HINTERKOPF GmbH, 73054 Eislingen (DE)
(72) Erfinder: Weber, Joachim, 73342 Bad Dietzenbach (DE); Osswald, Steffen, 73312 Geislingen (DE); Drexler, Stefan, 73337 Bad Überkingen/Hausen (DE); Schulz, Joachim, 73326 Deggingen (DE)
(74) Vertreter: Patentanwälte Magenbauer & Kollegen Partnerschaft mbB

(56) Entgegenhaltungen:
- WO-A2-2005/108278
- WO-A2-2009/040325
- US-A- 2 484 671
- US-A- 3 054 240
- US-A1- 2005 046 648

## Beschreibung

Die Erfindung betrifft eine Bearbeitungsvorrichtung für Behälterrohlinge; mit einem Maschinenbett, einer Zufuhreinrichtung für eine Zuführung von Behälterrohlingen, einer Abfuhreinrichtung für einen Abtransport von Behälterrohlingen, einem drehbar gelagerten Werkstückrundtisch mit mehreren Aufnahmeeinrichtungen, die für eine zeitweilige Festlegung von Behälterrohlingen und für einen Transport von Behälterrohlingen entlang eines kreisbahnabschnittsförmigen Transportwegs zwischen der Zufuhreinrichtung und der Abfuhreinrichtung ausgebildet sind, wobei der Transportweg einen ersten, kreissegmentförmigen Flächenabschnitt bestimmt, mehreren dem Werkstückrundtisch in radialer Richtung gegenüberliegenden Arbeitseinrichtungen, die zur Bearbeitung von am Werkstückrundtisch aufgenommenen Behälterrohlingen ausgebildet sind, und wenigstens einer Fördereinrichtung, die für eine Förderung von Komponenten von Behälterrohlingen und/oder für Behälterrohlinge entlang einer Förderstrecke zwischen einer Komponentenaufnahme und einer zugeordneten Arbeitseinrichtung ausgebildet ist.
Aus der WO 2005/108278 A2 ist eine Vorrichtung zur Förderung von Behältern längs einer gekrümmten Förderbahn bekannt, bei der die Behälter längs der Förderbahn mit einer Flüssigkeit befüllt und mit sterilisierten Verschlüssen verschlossen werden, wobei die Verschlüsse in einer Totzone zwischen einer Abfuhreinrichtung für die Behälter und einer Zufuhreinrichtung für die Behälter mittels einer geeigneten Sterilisationseinrichtung sterilisiert werden.

Die WO 2009/040325 A2 offenbart eine Befüllungseinrichtung für Behälter, bei der die Behälter zunächst einem Werkstückrundtisch zugeführt werden, um dann mittels eines schwenkbar gelagerten Befüllauslegers mit einer Flüssigkeit befüllt zu werden und anschließend mittels eines ebenfalls schwenkbar gelagerten Verschlussauslegers mit geeigneten Verschlüssen versehen zu werden.

Eine Bearbeitungsvorrichtung gemäß einem der Anmelderin bekannten, druckschriftlich nicht niedergelegten Stand der Technik dient dazu, einen oder mehrere Bearbeitungsvorgänge an Behälterrohlingen vorzunehmen. Bei den Behälterrohlingen handelt es sich exemplarisch um Aerosoldosen aus Metall oder um Tubenrohlinge aus Metall oder Kunststoff, die im Wesentlichen eine hohlzylindrische Gestalt aufweisen. Diese Behälterrohlinge können in der Bearbeitungsvorrichtung unterschiedlichen Bearbeitungsverfahren unterzogen werden. Ein häufig vorgenommenes Bearbeitungsverfahren ist die Aufbringung eines Verschlusses, insbesondere eines Schraubverschlusses, an einem der beiden Enden des Behälterrohlings, um diesen in einem nachfolgenden Bearbeitungsschritt, beispielsweise in einer Abfüllanlage mit einem Produkt befüllen und dann auch am zweiten Ende verschließen zu können.

Zur Durchführung derartiger Bearbeitungsvorgänge umfasst die Bearbeitungsvorrichtung ein Maschinenbett oder Grundgestell, an dem eine Zufuhreinrichtung für eine Zuführung von Behälterrohlingen angebracht ist. Die Zufuhreinrichtung ist mit einer vorgelagerten Transporteinrichtung, beispielsweise einem Förderband, einem Kettenförderer oder einem Magazinspeicher gekoppelt, über die die zu bearbeitenden Behälterrohlinge von vorgelagerten Bearbeitungsprozessen zur Bearbeitungseinrichtung transportiert werden. An dem Maschinenbett ist ferner ein Werkstückrundtisch drehbar gelagert, an dem mehrere Aufnahmeeinrichtungen für eine zeitweilige Festlegung von Behälterrohlingen angeordnet sind. Die Behälterrohlinge werden von der vorgelagerten Transporteinrichtung mittels der Zufuhreinrichtung an die Aufnahmeeinrichtungen bereitgestellt, beispielsweise aufgeschoben. Anschließend werden sie durch eine Drehschrittbewegung des Werkstückrundtischs, die eine getaktete Kreisbewegung der Behälterrohlinge bewirkt, den am Maschinenbett angebrachten Arbeitseinrichtungen zuführt. Mit den Arbeitseinrichtungen, die bezogen auf den Werkstückrundtisch in radialer Richtung außenliegend am Maschinenbett angeordnet sind, werden die gewünschten Bearbeitungsvorgänge an den Behälterrohlingen vorgenommen. Am Ende des kreisbahnabschnittsförmigen Transportwegs der an den Aufnahmeeinrichtungen aufgenommenen und nunmehr bearbeiteten Behälterrohlinge werden diese mit Hilfe einer Abfuhreinrichtung von den jeweiligen Aufnahmeeinrichtungen entfernt und einer nachgelagerten Transporteinrichtung zugeführt. Bei der nachgelagerten Transporteinrichtung kann es sich ebenfalls um ein Förderband, einen Kettenförderer oder einen Magazinspeicher handeln. Während der Bewegung des Werkstückrundtischs werden die Behälterrohlinge zwischen der Zufuhreinrichtung und der Abfuhreinrichtung auf einem kreisbahnabschnittsförmigen Transportweg fortbewegt, wobei eine von den in radialer Richtung nach außen weisenden Längsachsen der Behälterrohlinge überstrichene Fläche als erster, kreissegmentförmiger Flächenabschnitt angesehen werden kann. Ferner umfasst die bekannte Bearbeitungseinrichtung wenigstens eine Fördereinrichtung, die für eine Förderung von Komponenten von und/oder für Behälterrohlinge entlang einer Förderstrecke zwischen einer Komponentenaufnahme und einer zugeordneten Arbeitseinrichtung ausgebildet ist. Mit Hilfe der Fördereinrichtung kann beispielsweise eine Zuführung von Verschlusskomponenten, die im Zuge der Bearbeitung an den Behälterrohlingen angebracht werden sollen und/oder eine Abfuhr von Bearbeitungsrückstanden wie beispielsweise abgetrennten Randabschnitten der Behälterrohlinge, zwischen der Komponentenaufnahme und der zugeordneten Bearbeitungseinrichtung vorgesehen sein.

Die Aufgabe der Erfindung besteht darin, eine Bearbeitungseinrichtung und ein Verfahren zum Betreiben einer Bearbeitungseinrichtung bereitzustellen, die eine verbesserte Anpassung an unterschiedliche Fertigungsbedürfnisse ermöglichen.

Diese Aufgabe wird für eine Bearbeitungseinrichtung der eingangs genannten Art mit den Merkmalen des Anspruchs 1 gelöst. Hierbei ist vorgesehen, die Komponentenaufnahme der Fördereinrichtung in einem zweiten, kreissegmentförmigen Flächenabschnitt angeordnet ist, der den vom kreisbahnabschnittsförmigen Transportweg bestimmten ersten Flächenabschnitt zu einem Vollkreis ergänzt. Hierdurch kann die Komponentenaufnahme, die für eine Bereitstellung und/oder Abfuhr von Komponenten ausgebildet sein kann, in raumsparender Weise derart an der Bearbeitungsvorrichtung angeordnet werden, dass sie unabhängig von den Arbeitseinrichtungen mit neuen Komponenten beschickt und/oder von Abfallkomponenten befreit werden kann. Damit können die Arbeitsabläufe an der Bearbeitungsvorrichtung verbessert werden, da eine Auftrennung in einen Bearbeitungsbereich, in dem von einem Maschinenbediener Überwachungsaufgaben wahrgenommen werden, und in einen Ver- und Entsorgungsbereich, in dem eine Ver- und Entsorgung der Bearbeitungsvorrichtung vorgenommen wird, durch die entsprechende Gestaltung der Bearbeitungsvorrichtung vorgegeben wird. Dies ist insbesondere dann von Bedeutung, wenn die Bearbeitungsvorrichtung in eine Produktionslinie, die beispielsweise zur Herstellung von Aerosoldosen oder Tuben aus Kunststoff- oder Metallmaterial ausgebildet ist, integriert werden soll. Bei einer derartigen Produktionslinie ist es vorteilhaft, wenn alle Produktionsmaschinen von einer Vorderseite für einen Maschinenbediener zugänglich sind, der dafür verantwortlich ist, dass die Produktionsprozesse stabil mit der gewünschten Produktqualität durchgeführt werden. Eine Wartung, Versorgung und Entsorgung soll hingegen längs der gesamten Produktionslinie von einer der Vorderseite abgewandten Rückseite erfolgen, um bei der Durchführung der hierfür notwendigen Tätigkeiten, beispielsweise dem Antransport von zu verarbeitenden Komponenten und/oder dem Abtransport von zu entsorgenden Komponenten keine Störung des Produktionsprozesses hervorzurufen. Üblicherweise sind die Arbeitseinrichtungen derart am Maschinenbett angeordnet, dass die Behälterrohlinge und insbesondere deren in radialer Richtung nach außen gerichteten Längsachsen während der Drehschrittbewegung des Werkstückrundtischs zwischen der Zufuhreinrichtung und der Abfuhreinrichtung einen Winkelbereich von ca. 180 Grad bis ca. 330 Grad überstreichen, der den ersten, kreissegmentförmigen Flächenabschnitt bestimmt und der der Vorderseite der Bearbeitungsvorrichtung zugewandt ist. Dementsprechend umfasst der zweite Flächenabschnitt einen Winkelbereich zwischen ca. 180 Grad und 30 Grad und ist der Rückseite der Bearbeitungsvorrichtung zugewandt.

Vorteilhafte Weiterbildungen der Erfindung sind in den Unteransprüchen angegeben.

Zweckmäßig ist es, wenn eine Rotationsachse des Werkstückrundtischs in vertikaler Richtung ausgerichtet ist. Hierdurch wird der Aufbau der Bearbeitungsvorrichtung vereinfacht, insbesondere die Konstruktion des Maschinenbetts. Dies ist darauf zurückzuführen, dass die Lagerung des Werkstückrundtischs bei vertikal ausgerichteter Rotationsachse aufgrund der erleichterten Abstützung der Gewichtskraft des drehbar gelagerten Werkstückrundtischs bei gleicher Präzision mit einfacheren Mittel erfolgen kann.

Bevorzugt bestimmen die Längsachsen der am Werkstückrundtisch angebrachten Aufnahmeeinrichtungen wenigstens eine normal zur Rotationsachse ausgebildete Transportebene für die Behälterrohlinge. Die Längsachsen der Aufnahmeeinrichtungen geben die Ausrichtung der Längsachsen der an den Aufnahmeeinrichtungen aufzunehmenden Behälterrohlinge vor. Vorzugsweise sind die Längsachsen in radialer Richtung normal zur Rotationsachse des Werkstückrundtischs oder parallel zu dieser radialen Richtung ausgerichtet. Hierdurch ist die Integration einer derart ausgebildeten Bearbeitungsvorrichtung in eine Produktionslinie, bei der die Behälterrohlinge üblicherweise mit horizontal ausgerichteter Behälterlängsachse transportiert werden, vereinfacht. Bei der Übergabe der Behälterrohlinge von der vorgelagerten Transporteinrichtung an die Zufuhreinrichtung und von dort an die Aufnahmeeinrichtung ist keine Verschwenkung der Behälterlängsachse in eine vertikale Richtung erforderlich. In gleicher Weise gilt dies für die Übergabe der Behälterrohlinge vom Werkstückdrehtisch auf die Abfuhreinrichtung und die nachgelagerte Transporteinrichtung. Sofern notwendig, können die Aufnahmeeinrichtungen für eine zeitweilige translatorische Verlagerung der Behälterrohlinge in vertikaler Richtung parallel zur Rotationsachse ausgebildet sein, um beispielsweise eine vorteilhafte Positionierung der Behälterrohlinge gegenüber unterschiedlich ausgebildeten Arbeitseinrichtungen zu ermöglichen. In diesem Fall werden von den Längsachsen der Aufnahmeeinrichtungen mehrere Transportebenen bestimmt.

Vorzugsweise ist die Förderstrecke zwischen der Komponentenaufnahme und einer zugeordneten Arbeitseinrichtung zumindest bereichsweise in einer parallel zur Transportebene angeordneten Förderebene angeordnet und/oder schneidet die Transportebene und/oder übergreift den Werkstückrundtisch zumindest nahezu vollständig. Damit kann eine kompakte Anordnung der Komponentenaufnahme an der Bearbeitungsvorrichtung sowie einen vorteilhafter Materialfluss zu der zugeordneten Bearbeitungseinrichtung und/oder von der zugeordneten Bearbeitungseinrichtung gewährleistet werden.

Vorteilhaft ist es, wenn das Maschinenbett in einer normal zur Rotationsachse ausgerichteten Querschnittsebene zumindest abschnittsweise einen kreissegmentförmigen, insbesondere halbkreisförmigen, Querschnitt und/oder eine maximale Breite von 2,4m aufweist. Mit einem derartigen Querschnitt wird bei vorteilhafter radialer Anordnung der Arbeitseinrichtungen rund um einen Teilbereich des Werkstückrundtischs eine kompakte Gestaltung des Maschinenbetts erzielt und eine vorteilhafte Zugänglichkeit der Arbeitseinrichtungen für Einstellungs-, Rüst-, Überwachungs- und Wartungszwecke sichergestellt. Dies ist insbesondere dann der Fall, wenn das Maschinenbett einen abschnittsweise einen halbkreisförmigen Querschnitt aufweist, wobei ein Radius dieses halbkreisförmigen Querschnitts um die radiale Erstreckung der Arbeitseinrichtungen größer als der Radius des Werkstückrundtischs gewählt ist und beide Radien konzentrisch zueinander angeordnet sind. An den halbkreisförmigen Querschnitt schließt sich beispielsweise ein quadratischer oder rechteckiger Abschnitt an, dessen wenigstens eine Kantenlänge dem Radius des halbkreisförmigen Querschnitts des Maschinenbetts entspricht.

Bei einer Weiterbildung der Erfindung ist vorgesehen, dass die Zufuhreinrichtung und/oder die Abfuhreinrichtung einen Drehtisch mit parallel zur Rotationsachse ausgerichteter Drehachse aufweisen, an dem Haltevorrichtungen für Behälterrohlinge, insbesondere in sternförmig zur Drehachse ausgerichteter Anordnung, angebracht sind. Mit Hilfe des Drehtischs wird eine Änderung der Orientierung der Längsachse der Behälterrohlinge, insbesondere um 180 Grad, erreicht. Dadurch können die Behälterrohlinge zuverlässig von einer vorgelagerten Transporteinrichtung an die Aufnahmeeinrichtung oder von der Aufnahmeeinrichtung an eine nachgelagerte Transporteinrichtung übergeben werden. Vorzugsweise sind die Haltevorrichtungen dazu ausgebildet, die Behälterrohlinge an einem Endbereich zu ergreifen, um sie entlang der Längsachse der Behälterrohlinge von der vorgelagerten Transporteinrichtung abzuziehen und auf die Aufnahmeeinrichtung aufzustecken und/oder um sie entlang der Längsachse der Behälterrohlinge von der Aufnahmeeinrichtung abzuziehen und auf eine nachgelagerte Transporteinrichtung aufzustecken oder aufzulegen.

Eine vorteilhafte Weiterbildung der Erfindung sieht vor, dass die Aufnahmeeinrichtung einen drehbar gelagerten Aufnahmedorn umfasst, der mit der zugeordneten Antriebseinrichtung verbunden ist und der für eine Rotation von Behälterrohlingen um eine horizontal ausgerichtete Längsachse ausgebildet ist. Hierdurch wird eine Rotation des Behälterrohlings relativ zu einem Arbeitsmittel, insbesondere einem Werkzeug, einer gegenüberliegend angeordneten Arbeitseinrichtung ermöglicht. Die Rotation des Behälterrohlings kann kontinuierlich oder diskontinuierlich erfolgen. Eine kontinuierliche Rotation kann beispielsweise bei einer Bearbeitung der gesamten Umfangsoberfläche des Behälterrohlings, beispielsweise bei einem Beschichtungs- oder Trocknungsvorgang oder bei einem Beschneidevorgang vorgesehen sein. Hingegen ist für einen Aufschraubvorgang oder eine lokale Bearbeitung des Behälterrohlings eine diskontinuierliche Rotation vorzusehen. Gegebenenfalls ist die Aufnahmeeinrichtung mit einem Sensorsystem ausgerüstet, das zur Erfassung einer rotatorischen Position des Behälterrohlings ausgebildet ist. Nach Erfassung der rotatorischen Position kann eine Rotation des Behälterrohlings vorgesehen sein, um diesen in eine korrekte Lage gegenüber einem Arbeitsmittel zu bringen und anschließend einen entsprechenden lokal begrenzten Arbeitsvorgang am Behälterrohling durchzuführen.

Vorzugsweise ist die Antriebseinrichtung der Aufnahmeeinrichtung als Direktantrieb, insbesondere als elektrischer Synchron-Servomotor, ausgebildet und umfasst eine Antriebswelle, die einstückig oder über eine Kupplungseinrichtung, insbesondere eine Hohlschaftkegelkupplung, mit dem Aufnahmedorn verbunden ist. Bei einem Direktantrieb kann es sich um einen pneumatischen, hydraulischen oder elektrischen Rotationsantrieb handeln, bei dem die Antriebswelle ohne Zwischenschaltung einer Getriebeeinrichtung mit dem Aufnahmedorn verbunden ist. Dabei können Aufnahmedorn und Antriebswelle einstückig ausgebildet sein. Vorzugsweise ist zur Kopplung des Aufnahmedorns an die Antriebswelle eine Kupplungseinrichtung vorgesehen, die es ermöglicht, den Aufnahmedorn auszutauschen, um beispielsweise ein Anpassung der Aufnahmeeinrichtung an unterschiedlich dimensionierte Behälterrohlinge zu ermöglichen. Besonders bevorzugt ist die Kupplungseinrichtung als Hohlschaftkegelkupplung, insbesondere nach DIN 69893, ausgebildet, da hierdurch eine drehfeste und spielarme Ankopplung des Aufnahmedorns an die Antriebswelle verwirklicht werden kann.

In weiterer Ausgestaltung der Erfindung ist dem Werkstückrundtisch und der Zufuhreinrichtung und/oder der Abfuhreinrichtung jeweils eine Antriebseinrichtung für eine Bereitstellung einer Drehbewegung zugeordnet. Dadurch wird die Möglichkeit geschaffen, die bewegbaren Komponenten der Bearbeitungsvorrichtung unabhängig voneinander und ohne eine Zwangskopplung untereinander in Bewegung zu versetzen. Dies ermöglicht eine Optimierung der Bewegungen des Werkstückrundtischs, der Aufnahmeeinrichtungen und der Zu- und/oder Abfuhreinrichtungen in Abhängigkeit von den Bearbeitungsprozessen, denen die Behälterrohlinge zugeführt werden sollen.

Zweckmäßig ist es in diesem Zusammenhang, wenn die Antriebseinrichtungen mit einer Steuereinrichtung verbunden sind, die für eine unabhängige, insbesondere synchronisierte, Ansteuerung der Drehbewegungen der Antriebseinrichtungen ausgebildet ist. Die Steuereinrichtung ermöglicht somit eine freie Gestaltung der Bewegungsabläufe zwischen der Drehschrittbewegung des Werkstückrundtischs, der kontinuierlichen oder diskontinuierlichen Rotation der Aufnahmedorne der Aufnahmeeinrichtung und der Rotation der Zu- und/oder Abfuhreinrichtung. Vorzugsweise sind diese Bewegungen zueinander synchronisiert.

Bevorzugt ist zumindest einer Antriebseinrichtung für eine Aufnahmeeinrichtung ein der Steuerungseinrichtung zugehöriges Leistungsmodul zugeordnet, das am Werkstückrundtisch angeordnet ist. Das Leistungsmodul dient zur Beeinflussung des elektrischen Energieflusses an die zugeordnete Aufnahmeeinrichtung und wird von der Steuereinrichtung mit einem entsprechenden Steuersignal angesteuert. Durch die Anbringung des Leistungsmoduls am Werkstückrundtisch wird die Verkabelung zwischen Leistungsmodul und Aufnahmeeinrichtung erleichtert. Zudem ist es ausreichend, wenn lediglich ein elektrischer Strompfad für die Bereitstellung des elektrischen Energieflusses für alle Aufnahmeeinrichtungen über einen Drehanschluss geführt werden muss. Die Steuersignale von der Steuereinrichtung können über Steuerleitungen und/oder über eine optische Koppelstrecke und/oder über eine Funkstrecke auf die Leistungsmodule, insbesondere auch im Rahmen eines vorgebbaren Busprotokolls, übertragen werden. Bei einer Regelung der Antriebseinrichtungen kann auch eine bidirektionale Kommunikation zwischen Steuereinrichtung und den zugeordneten Leistungsmodulen über wenigstens eine der vorgestehend genannten Übertragungsarten vorgesehen sein.

In vorteilhafter Ausgestaltung der Erfindung ist dem Werkstückrundtisch ein zentral angeordneter, mehrpoliger elektrischer Drehanschluss zugeordnet, der für eine Bereitstellung von elektrischer Versorgungsenergie und Steuersignalen der Steuerungseinrichtung an die Leistungsmodule der Aufnahmeeinrichtungen ausgebildet ist. Mit diesem Drehanschluss wird die Übertragung der elektrischen Versorgungsenergie und der Steuersignale von der stationär am Maschinenbett angeordneten Steuereinrichtung an die Leistungsmodule erzielt. Exemplarisch kann der Drehanschluss als Kombination einer Schleifringanordnung und zugeordneter Kontaktbürsten ausgebildet sein. Bei einer alternativen Ausführungsform ist die Steuereinrichtung dezentral ausgebildet, so dass ein erster Teil der Steuereinrichtung, der für die Ansteuerung der Antriebseinrichtung des Werkstückrundtischs und der stationär am Maschinenbett angebrachten Arbeitseinrichtungen vorgesehen ist, ortsfest, insbesondere am Maschinenbett, angebracht ist. Ein zweiter Teil der Steuereinrichtung ist hingegen am Werkstückrundtisch angebracht und direkt mit den Leistungsmodulen verbunden. Eine Kommunikation zwischen dem ersten und dem zweiten Teil der Steuereinrichtung ist drahtgebunden über den Drehanschluss oder drahtlos über eine optoelektronische und/oder eine funkelektronische Verbindung gewährleistet. Da die beiden Teile der Steuereinrichtung jeweils autark handeln können, ist lediglich eine Übertragung von Triggersignalen notwendig, um die gewünschte koordinierte Bewegung sämtlicher Antriebseinrichtungen zu gewährleisten.

Bevorzugt sind die Arbeitseinrichtungen zur Bereitstellung wenigstens einer Funktion aus der Gruppe Positionieren, Trennen, Fügen, Montieren, Umformen, Einpressen, Überwachen, Beschichten, Trocknen, Oberflächenaktivieren ausgebildet. Beispielsweise ist eine Arbeitseinrichtung zum Beschneiden eines Oberflächenbereichs, insbesondere eines Endbereichs des Behälterrohlings, mit einem kontaktgebundenen oder kontaktlosen Trennverfahren, exemplarisch mittels eines Schneidmessers oder eines Laserstrahls, ausgebildet. Ergänzend oder alternativ ist die Arbeitseinrichtung zum Fügen einer Komponente an den Behälterrohling, beispielsweise durch Laserschweißen, Ultraschallschweißen, Heißsiegeln, Reibschweißen, ausgebildet. Ferner kann die Arbeitseinrichtung ergänzend oder alternativ dazu ausgebildet sein, den Behälter an einem Teilbereich oder an seiner gesamten Umfangsoberfläche umzuformen, insbesondere lokal zu prägen. Die Arbeitseinrichtung kann auch dazu eingerichtet sein, eine Komponente wie einen Schraubverschluss an den Behälterrohling zu montieren und/oder den Behälterrohling zu prüfen, beispielsweise im Hinblick auf die Qualität einer Beschichtung oder Bedruckung und/oder die Position einer montierten Komponente. Die Arbeitseinrichtung kann auch für eine Beschichtung des Behälterrohlings, insbesondere für eine Bedruckung, und/oder für eine Trocknung einer aufgebrachten Beschichtung, insbesondere durch Wärme- oder Ultraviolettstrahlung, und/oder für eine Oberflächenaktivierung vor Durchführung eines Füge- oder Beschichtungsvorgangs, beispielsweise durch Abflammen der Oberfläche des Behälterrohlings ausgebildet sein.

Die Bearbeitungsvorrichtung nach einem der Ansprüche 7 bis 12 kann wie folgt betrieben werden: Ansteuern der Antriebseinrichtung des Werkstückrundtischs mit einem ersten Ansteuersignal zur Durchführung einer Drehschrittbewegung zu einem frei wählbaren Drehschrittzeitpunkt mit frei wählbarem Drehschrittwinkel, Ansteuern einer Antriebseinrichtung wenigstens einer Bearbeitungseinrichtung zu einem frei wählbaren Bearbeitungszeitpunkt, Ansteuern einer Antriebseinrichtung für die Zufuhreinrichtung und/oder die Abfuhreinrichtung zu einem frei wählbaren Übergabezeitpunkt.

Eine vorteilhafte Ausführungsform der Erfindung ist in der Zeichnung dargestellt. Hierbei zeigt
- Figur 1: eine schematische Draufsicht auf eine Bearbeitungsvorrichtung, die zur Integration in eine Produktionslinie für die Herstellung von Aerosoldosen ausgebildet ist,
- Figur 2: eine Schnittdarstellung einer Antriebseinrichtung für einen Aufnahmedorn der Aufnahmeeinrichtung und
- Figur 3: eine perspektivische Darstellung einer konkreten ausführungsform der Bearbeitungsvorrichtung gemäß Figur 1.

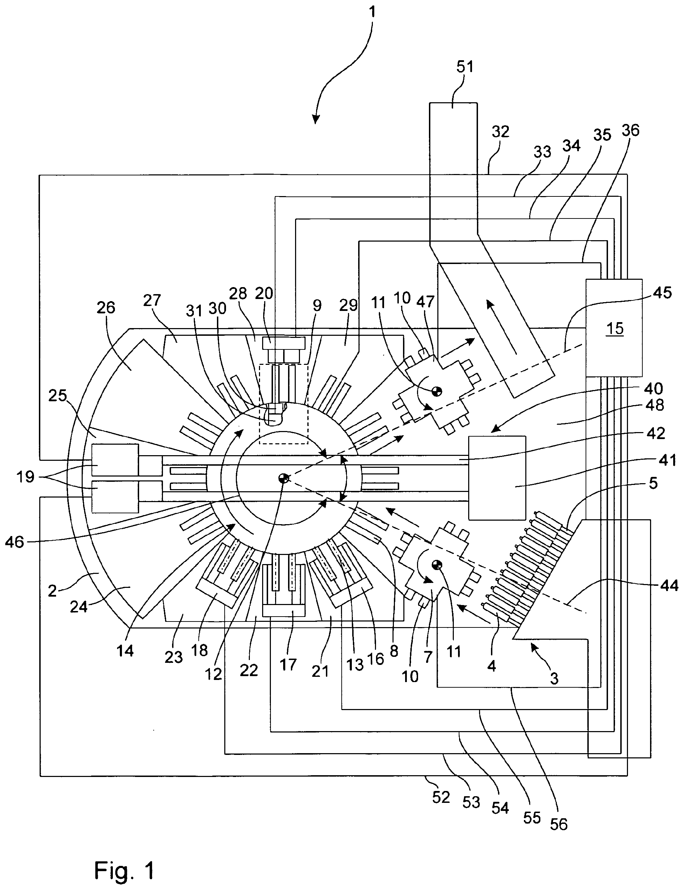

In der Figur 1 ist schematisch eine Bearbeitungsvorrichtung 1 zur Bearbeitung von Behälterrohlingen wie beispielsweise Dosenrohlingen für Aerosol- oder Getränkedosen oder Tubenrohlingen zur Befüllung mit pastösen Inhalten, die aus Metall oder Kunststoff oder aus Verbundmaterialien hergestellt sein können, dargestellt. Im Bereich der der Verpackungsmittelindustrie wird eine derartige Bearbeitungsvorrichtung 1 auch als Aufschraubmaschine bezeichnet, da eine der typischen Anwendungsfälle für einen Bearbeitungsvorgang des Behälterrohlings das Aufbringen eines Schraubverschlusses ist.

Die Bearbeitungsvorrichtung 1 umfasst ein Maschinenbett 2, das die nachstehend näher beschriebenen Komponenten der Bearbeitungsvorrichtung 1 trägt und das zur Aufstellung auf einem nicht näher dargestellten, vorzugsweise ebenen, Untergrund, beispielsweise in einer Fabrikhalle, vorgesehen ist. Exemplarisch ist das Maschinenbett 2 als Schweißkonstruktion aus nicht näher dargestellten Rohren und Platten ausgebildet.

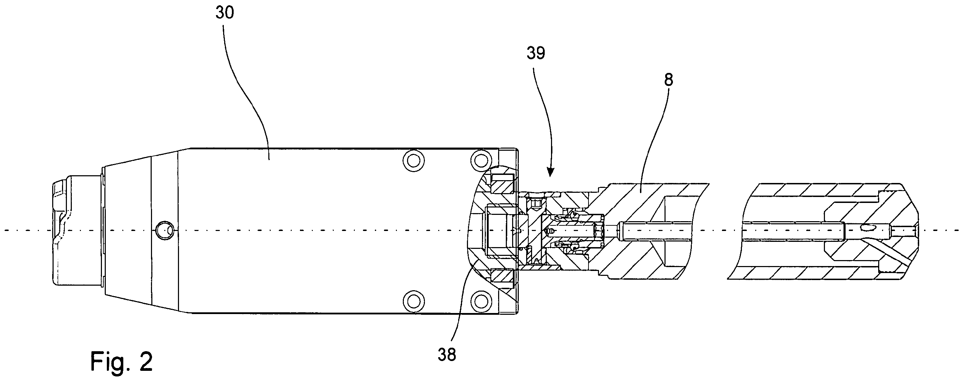

Benachbart zum Maschinenbett 2 ist eine vorgelagerte Transporteinrichtung 3 für eine Zuführung von Behälterrohlingen 4 angeordnet, die als Kettenförder ausgebildet ist und bei der eine Vielzahl von Trägerzapfen 5 an einer in Figur 2 erkennbaren, endlos umlaufend bewegbaren Förderkette 6 angebracht sind. Die vorgelagerte Transporteinrichtung 3 holt die Behälterrohlinge 4 von einer nicht dargestellten, im Produktionsablauf vorgelagerten Produktionsmaschine ab und stellt sie an die Bearbeitungsvorrichtung 1 bereit. Dabei sind die Behälterrohlinge 4 auf die Trägerzapfen 5 aufgeschoben und werden von der vorgelagerten Transporteinrichtung 3 an eine Zufuhreinrichtung 7 bereitgestellt.

Bei den Behälterrohlingen 4 handelt es sich exemplarisch um Tubenrohlinge, die im Wesentlichen hohlzylindrisch ausgebildet sind und an einem ersten Ende einen verjüngt ausgebildeten Verschlussbereich mit angeformtem Gewindeabschnitt und am zweiten Ende eine kreisförmige Befüllungsöffnung aufweisen. die Behälterrohlinge 4 sind derart auf die Trägerzapfen 5 aufgeschoben, dass der Verschlussbereich von der vorgelagerten Transportvorrichtung 3 abweist. Die Zufuhreinrichtung 7 dient dazu, die Behälterrohlinge 4 am ersten Ende zu erfassen, von den Trägerzapfen 5 abzuziehen und nach Durchführung einer Schwenkbewegung auf Aufnahmedorne 8 einer Aufnahmeeinrichtung 9 aufzuschieben. Exemplarisch sind die Aufnahmedorne 8 der Aufnahmeeinrichtung 9 jeweils paarweise parallel ausgerichtet, so dass auch jeweils zwei Behälterrohlinge 4 mit einer translatorischen Bewegung zwischen Zufuhreinrichtung 7 und Aufnahmeeinrichtung 9 auf die Aufnahmedorne 8 aufgeschoben werden können.

Hierzu weist die Zufuhreinrichtung 7 ebenfalls paarweise angeordnete Greifmittel 10 auf, die zum Ergreifen der ersten Ende der Behälterrohlinge 4 ausgebildet sind und die parallel zu den gegenüberliegend angeordneten Trägerzapfen 5 bzw. parallel zu den gegenüberliegend angeordneten Aufnahmedornen 8 verschoben werden können, um die gewünschten Abzieh- und Aufsteckvorgänge durchführen zu können. Die Zufuhreinrichtung 7 ist mittels einer nicht näher dargestellten Antriebseinrichtung um eine normal zur Darstellungsebene der Figur 1 ausgerichtete Drehachse 11 drehbar. Die Drehachse 11 ist durch ein entsprechendes Symbol in der Figur 1 angegeben. Die bevorzugte Drehrichtung für die Zufuhreinrichtung 7 ist in der Figur 1 durch einen Pfeil angedeutet.

Die Aufnahmeeinrichtungen 9 sind an einem Werkstückrundtisch 14 aufgenommen der seinerseits am Maschinenbett 2 drehbar gelagert ist, wobei eine Rotationsachse 12 des Werkstückrundtischs 14 normal zur Darstellungsebene der Figur 1 und parallel zur Drehachse 11 der Zufuhreinrichtung 7 ausgerichtet ist. Der Werkstückrundtisch 14 ist beispielhaft als Rotor eines, vorzugsweise als Torquemotor ausgebildeten, nicht näher dargestellten Elektromotors ausgebildet. Durch Bereitstellung elektrischer Energie und gegebenenfalls auch geeigneten Steuersignalen von einer exemplarisch am Rande des Maschinenbetts 2 angebrachten Steuerungseinrichtung 15 an diesen Elektromotor wird dieser insbesondere in eine getaktete Drehschrittbewegung, vorzugsweise mit einem vorgebbaren Drehschrittintervall und/oder einem vorgebbaren Beschleunigungsverlauf für die durchzuführenden Drehschrittbewegungen, versetzt. Somit können die zu bearbeitenden Behälterrohlinge 4 im Zuge der Drehschrittbewegung jeweils gegenüberliegend zu den radial außenliegend am Maschinenbett 2 angebrachten Arbeitseinrichtungen 16 bis 20 positioniert werden.

Bei der in den Figuren 1 und 2 dargestellten Bearbeitungsvorrichtung 1 sind exemplarisch fünf Arbeitseinrichtungen 16 bis 20 angebracht. Je nach den Erfordernissen für die Bearbeitung der Behälterrohlinge 4 können an der beispielhaft dargestellten Bearbeitungsvorrichtung 1 bis zu neun unterschiedliche Arbeitseinrichtungen auf jeweils am Maschinenbett 2 festlegbaren und in einfacher Weise austauschbaren Trägerplatten 21 bis 29 angebracht werden.

Für die Durchführung der Bearbeitungsvorgänge an den Arbeitseinrichtungen 16 bis 18 ist es vorteilhaft, wenn die Aufnahmedorne 8 jeweils um eine Längsachse 13 rotiert werden können. Hierzu sind im Inneren der Aufnahmeeinrichtung 9 jedem der Aufnahmedorne 8 eine, insbesondere als elektrischer Synchron-Servomotor, ausgebildete Antriebseinrichtung 30 zugeordnet, die exemplarisch als Direktantrieb ausgebildet ist. Bei einem Direktantrieb wird die von der Antriebseinrichtung 30 bereitgestellte Bewegungsenergie ohne eine zwischengeschaltete Getriebeeinrichtung direkt an eine Antriebswelle 38 zur Verfügung gestellt, an die der Aufnahmedorn 8 einstückig, oder wie dies in der Darstellung der Figur 2 ersichtlich ist, mittels einer Kupplungseinrichtung 39 angebracht ist. Bei der Kupplungseinrichtung handelt es sich beispielhaft um eine kommerziell verfügbare Hohlschaftkupplung, insbesondere nach DIN 69893, daher wird auf eine nähere Beschreibung verzichtet. Die Kupplungseinrichtung 39 gewährleistet eine drehfeste und spielfreie Ankopplung des Aufnahmedorns 8 an die Antriebswelle 38.

Exemplarisch ist jeder Antriebseinrichtung 30 ein in der Figur 1 schematisch dargestelltes Leistungsmodul 31 zugeordnet, das über eine Steuerverbindung 33 mit der Steuerungseinrichtung 15 verbunden ist und das den elektrischen Energiefluss an die Antriebseinrichtung 30 beeinflusst. Die Steuerverbindung 33 ist für einen unidirektionalen Empfang von Steuerungssignalen von der Steuerungseinrichtung 15 oder für einen bidirektionalen Austausch von Steuerungssignalen und Sensorsignalen, insbesondere von Drehpositionsdaten, mit der Steuerungseinrichtung 15 ausgebildet. Exemplarisch kann die Steuerverbindung 33 entsprechend der Darstellung in der Figur 1 als Kabelverbindung ausgebildet sein. Ergänzend oder alternativ kann auch eine Datenübertragung zwischen der Steuerungseinrichtung 15 und dem jeweiligen Leistungsmodul 31 über eine Funkstrecke und/oder über eine optische Koppelstrecke vorgesehen sein. Dies gilt in gleicher Weise auch für die Steuerverbindungen 35, 36, 56, die den Werkstückrundtisch 14 und die Zufuhreinrichtung 7 sowie die Abfuhreinrichtung 47 mit der Steuerungseinrichtung 15 verbinden.

Ferner ist das Leistungsmodul 31 in nicht näher dargestellter Weise mit einer elektrischen Energieversorgung verbunden, die über einen zentral in der Aufnahmeeinrichtung 9 angebrachten, nicht näher dargestellten Drehanschluss eine Übertragung elektrischer Energie vom Maschinenbett 2 auf den drehbar gelagerten Werkstückrundtisch 14 und die daran angebrachten Leistungsmodule 31 der Antriebseinrichtungen 30 ermöglicht. Ein derartiger Drehanschluss kann beispielsweise durch einen oder mehrere konzentrisch zur Rotationsachse 12 ausgerichtete, am Maschinenbett 2 oder am Werkstückrundtisch 14 festgelegte Schleifringe und gegenüberliegend angeordnete Kontaktbürsten verwirklicht werden.

Exemplarisch sind die Arbeitseinrichtungen 16 bis 20 ebenfalls über Steuerverbindungen 32, 34, 52, 53, 54, 55 mit der Steuerungseinrichtung 15 verbunden, so dass die Steuerungseinrichtung 15 sämtliche Bewegungs- und Bearbeitungsvorgänge der Bearbeitungsvorrichtung 1 beeinflussen, insbesondere koordinieren, kann.

Beispielsweise bilden die Arbeitseinrichtungen 16 bis 18 eine Beschichtungsstation, an der mittels der Arbeitseinrichtung 16 zunächst eine Oberflächenaktivierung mittels Beflammen vorgenommen wird. An der als Druckeinrichtung ausgebildeten Arbeitseinrichtung 17 wird dann in einem üblichen Druckverfahren, insbesondere mit Flexodruck oder Tintentstrahldruck, ein Dekor auf dem Behälterrohling aufgebracht oder ein bereits bestehendes Dekor ergänzt. Die Arbeitseinrichtung 18 ist als Trockungsstation für das aufgebrachte Dekor ausgebildet und umfasst exemplarisch eine Lichtquelle für die Aussendung ultravioletter Strahlung zum Aushärten der Farbe.

Die Arbeitseinrichtung 19 ist exemplarisch als Aufschraubstation ausgebildet, an der die Behälterrohlinge 4 mit nicht dargestellten Schraubverschlüssen versehen werden. Die Schraubverschlüsse werden über eine Fördereinrichtung 40 an die Arbeitseinrichtung 19 zur Verfügung gestellt und dort durch eine Linearbewegung und/oder eine Rotationsbewegung zwischen Schraubverschluss und Behälterrohling 4 an den Behälterrohling 4 montiert. Die Fördereinrichtung 40 umfasst eine Komponentenaufnahme 41, die exemplarisch am Maschinenbett 2 festgelegt ist und als Vorratsbehälter für die zu montierenden Schraubverschlüsse dient. Ferner umfasst die Fördereinrichtung 40 eine Transportschiene 42, die sich quer über die Aufnahmeeinrichtung 9 erstreckt und die zur Förderung der Schraubverschlüsse aus der Komponentenaufnahme 41 zur jeweiligen Arbeitseinrichtung 19 dient. Die Transportschiene 42 kann neben Fördermitteln wie einem nicht dargestellten Förderband auch ebenfalls nicht dargestellte Ausrichtmittel enthalten, mit denen sichergestellt werden kann, dass die aus der Komponentenaufnahme 41 entnommenen Schraubverschlüsse der Arbeitseinrichtung 19 auch lagerichtig zugeführt werden.

Zur Erzielung einer vorteilhaften räumlichen Anordnung der Komponentenaufnahme 41 der Fördereinrichtung 40 ist diese abseits eines ersten, kreissegmentförmigen Flächenabschnitts 43 angeordnet, der von zwei Geraden 44, 45 berandet wird. Diese Geraden 44, 45 erstrecken sich ausgehend von der Rotationsachse 12 in radialer Richtung nach außen und beranden jeweils den Bereich, in dem ein Behälterrohling 4 längs seines kreisbahnabschnittsförmigen Transportwegs 46 zwischen der Zufuhreinrichtung 7, dem Werkstückrundtisch 14 und einer nachgeschalteten Abfuhreinrichtung 47 von der Bearbeitungsvorrichtung 1 gefördert wird. Der erste, kreissegmentförmige Flächenabschnitt 43 wird von einem zweiten, kreissegmentförmigen Flächenabschnitt 48 zu einer Kreisfläche ergänzt. Durch die Anordnung der Komponentenaufnahme 41 im Bereich des zweiten, kreissegmentförmigen Flächenabschnitts 48 wird zudem erreicht, dass eine Beschickung und gegebenenfalls eine Entleerung der Komponentenaufnahme 41 mit bzw. von Komponenten, insbesondere den zu verarbeitenden Schraubverschlüssen, von einer Rückseite 49 der Bearbeitungsvorrichtung 1 erfolgen kann. Damit werden Störungen in den Arbeitsabläufen an einer Vorderseite 50 der Bearbeitungsvorrichtung 1, wo ein Maschinenbediener Rüstarbeiten, Einstellarbeiten, Kontrollarbeiten und weitere, unmittelbar mit dem Bearbeitungsprozess für die Behälterrohlinge verbundene Arbeiten, vermieden. Dementsprechend kann die Beschickung und/oder Entleerung der Komponentenaufnahme ebenfalls ungestört von der Rückseite 49 vorgenommen werden.

Nach Passieren der Arbeitseinrichtung 19 werden die Behälterrohlinge 4 vom Werkstückrundtisch 14 und den daran angebrachten Aufnahmeeinrichtungen 9 im Zuge einer oder mehrerer weiterer Drehschrittbewegungen an die Arbeitseinrichtung 20 positioniert, die exemplarisch als optische Kontrollstation ausgebildet ist und die beispielhaft die korrekte Montage der Schraubverschlüsse an den Behälterrohlingen 4 überprüft. Anschließend erfolgt eine Übergabe der Behälterrohlinge 4 an ein Förderband 51 mittels der Abfuhreinrichtung 47, die exemplarisch identisch zur Zufuhreinrichtung 7 ausgebildet ist.

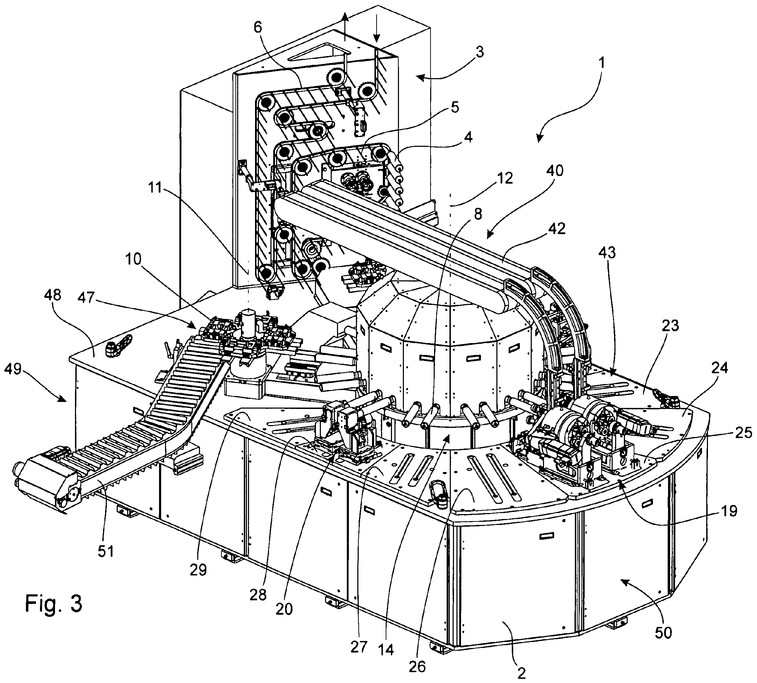

Aus der Figur 3, in der aus Gründen der Übersichtlichkeit keine Darstellung der Komponentenaufnahme vorgesehen ist, lässt sich die konkrete und beispielhafte Ausgestaltung einer Bearbeitungsvorrichtung 1 entnehmen. Insbesondere zeigt die Figur 3 auch die Ausgestaltung der vorgelagerten Transporteinrichtung 3 als Kettenförderer, dessen Förderkette 6 nur teilweise dargestellt ist, da diese in der Praxis bis zu einer nicht dargestellten, vorgelagerten Produktionsmaschine erstreckt ist. Die exemplarische Förderrichtung der Förderkette 6 ist durch die entsprechenden Pfeile dargestellt.

## Patentansprüche

1. Bearbeitungsvorrichtung für Behälterrohlinge (4); mit einem Maschinenbett (2), einer Zufuhreinrichtung (7) für eine Zuführung von Behälterrohlingen (4), einer Abfuhreinrichtung (47) für einen Abtransport von Behälterrohlingen (4), einem drehbar gelagerter Werkstückrundtisch (14) mit mehreren Aufnahmeeinrichtungen (9), die für eine zeitweilige Festlegung von Behälterrohlingen (4) und für einen Transport von Behälterrohlingen (4) entlang eines kreisbahnabschnittsförmigen Transportwegs (46) zwischen der Zufuhreinrichtung (7) und der Abfuhreinrichtung (47) ausgebildet sind, wobei der Transportweg (46) einen ersten, kreissegmentförmigen Flächenabschnitt (43) bestimmt, mehreren dem Werkstückrundtisch (14) in radialer Richtung gegenüberliegenden Arbeitseinrichtungen (16 bis 20), die zur Bearbeitung von am Werkstückrundtisch (14) aufgenommenen Behälterrohlingen (4) ausgebildet sind, und wenigstens einer Fördereinrichtung (40), die für eine Förderung von Komponenten von Behälterrohlingen (4) entlang einer Förderstrecke (42) zwischen einer Komponentenaufnahme (41) und einer zugeordneten Arbeitseinrichtung (19) ausgebildet ist, wobei die Komponentenaufnahme (41) der Fördereinrichtung (40) in einem zweiten, kreissegmentförmigen Flächenabschnitt (48) angeordnet ist, der den vom kreisbahnabschnittsförmigen Transportweg (46) bestimmten ersten Flächenabschnitt (43) zu einem Vollkreis ergänzt.

2. Bearbeitungsvorrichtung nach Anspruch 1, **dadurch gekennzeichnet, dass** eine Rotationsachse (12) des Werkstückrundtischs (14) in vertikaler Richtung ausgerichtet ist.

3. Bearbeitungsvorrichtung nach Anspruch 2, **dadurch gekennzeichnet, dass** Längsachsen (13) der am Werkstückrundtisch (14) angebrachten Aufnahmeeinrichtungen (9) wenigstens eine normal zur Rotationsachse (12) ausgebildete Transportebene für die Behälterrohlinge (4) bestimmen

4. Bearbeitungsvorrichtung nach Anspruch 3, **dadurch gekennzeichnet, dass** die Förderstrecke (42) zwischen der Komponentenaufnahme (41) und einer zugeordneten Arbeitseinrichtung (19) zumindest bereichsweise in einer parallel zur Transportebene angeordneten Förderebene angeordnet ist und/oder die Transportebene schneidet und/oder den Werkstückrundtisch (14) zumindest nahezu vollständig übergreift.

5. Bearbeitungsvorrichtung nach Anspruch 2, 3 oder 4, **dadurch gekennzeichnet, dass** das Maschinenbett 2() in einer normal zur Rotationsachse (12) ausgerichteten Querschnittsebene zumindest abschnittsweise einen kreissegmentförmigen, insbesondere halbkreisförmigen, Querschnitt und/oder eine maximale Breite von 2,4m aufweist.

6. Bearbeitungsvorrichtung nach Anspruch 2, 3, 4 oder 5, **dadurch gekennzeichnet, dass** die Zufuhreinrichtung (7) und/oder die Abfuhreinrichtung (47) einen Drehtisch mit parallel zur Rotationsachse (12) ausgerichteter Drehachse (11) aufweisen, an dem Haltevorrichtungen (10) für Behälterrohlinge (4), insbesondere in sternförmig zur Drehachse (11) ausgerichteter Anordnung, angebracht sind.

7. Bearbeitungsvorrichtung nach einem der vorhergehenden Ansprüche, **dadurch gekennzeichnet, dass** die Aufnahmeeinrichtung (9) einen drehbar gelagerten Aufnahmedorn (8) umfasst, der mit einer zugeordneten Antriebseinrichtung (30) verbunden ist und der für eine Rotation von Behälterrohlingen (4) um eine horizontal ausgerichtete Längsachse (13) ausgebildet ist.

8. Bearbeitungsvorrichtung nach Anspruch 7, **dadurch gekennzeichnet, dass** die Antriebseinrichtung (30) der Aufnahmeeinrichtung (9) als Direktantrieb, insbesondere als elektrischer Synchron-Servomotor, ausgebildet ist und eine Antriebswelle (38) umfasst, die einstückig oder über eine Kupplungseinrichtung (39), insbesondere eine Hohlschaftkegelkupplung, mit dem Aufnahmedorn (8) verbunden ist.

9. Bearbeitungsvorrichtung nach einem der vorhergehenden Ansprüche, **dadurch gekennzeichnet, dass** dem Werkstückrundtisch (14) und der Zufuhreinrichtung (7) und/oder der Abfuhreinrichtung (47) jeweils eine Antriebseinrichtung für eine Bereitstellung einer Drehbewegung zugeordnet ist.

10. Bearbeitungsvorrichtung nach Anspruch 8, **dadurch gekennzeichnet, dass** die Antriebseinrichtungen mit einer Steuereinrichtung (15) verbunden sind, die für eine unabhängige, insbesondere synchronisierte, Ansteuerung der Drehbewegungen der Antriebseinrichtungen ausgebildet ist.

11. Bearbeitungsvorrichtung nach Anspruch 7, 8, 9 oder 10, **dadurch gekennzeichnet, dass** zumindest einer Antriebseinrichtung (30) für eine Aufnahmeeinrichtung (9) ein der Steuerungseinrichtung (15) zugehöriges Leistungsmodul (31) zugeordnet ist, das am Werkstückrundtisch (14) angeordnet ist.

12. Bearbeitungsvorrichtung nach Anspruch 11, **dadurch gekennzeichnet, dass** dem Werkstückrundtisch (14) ein zentral angeordneter, mehrpoliger elektrischer Drehanschluss zugeordnet ist, der für eine Bereitstellung von elektrischer Versorgungsenergie und Steuersignalen der Steuerungseinrichtung (15) an die Leistungsmodule (31) der Aufnahmeeinrichtungen (9) ausgebildet ist.

13. Bearbeitungsvorrichtung nach einem der vorhergehenden Ansprüche, **dadurch gekennzeichnet, dass** die Arbeitseinrichtungen (16 bis 20) zur Bereitstellung wenigstens einer Funktion aus der Gruppe Positionieren, Trennen, Fügen, Montieren, Umformen, Einpressen, Überwachen, Beschichten, Trocknen, Oberflächenaktivieren ausgebildet sind.

## Claims

1. Processing apparatus for container blanks (4), with a machine bed (2), a feed device (7) for feeding container blanks (4), a discharge device (47) for removal of container blanks (4), a rotatably mounted rotary worktable (14) with several locating devices (9) designed for temporary location of container blanks (4) and for conveyance of container blanks (4) along a circular orbit section shaped conveyance path (46) between the feed device (7) and the discharge device (47), wherein the conveyance path (46) determines a first circle segment shaped surface section (43), several operating devices (16 to 20) lying opposite the rotary worktable (14) in the radial direction and which are designed for the processing of container blanks (4) located on the rotary worktable (14), and at least one conveyor (40) designed for conveyance of components of container blanks (4) along a conveyor section (42) between a component mounting (41) and an assigned operating device (19), wherein the component mounting (41) of the conveyor (40) is located in a second circle segment shaped surface section (48), which supplements the first surface section (43) determined by the circular orbit section shaped conveyance path (46) to make a full circle.

2. Processing apparatus according to claim 1, **characterised in that** a rotation axis (12) of the rotary worktable (14) is aligned in the vertical direction.

3. Processing apparatus according to claim 2, **characterised in that** longitudinal axes (13) of the locating devices (9) attached to the rotary worktable (14) determine at least one plane of conveyance for the container blanks (4) which is normal to the rotation axis (12).

4. Processing apparatus according to claim 3, **characterised in that** the conveyor section (42) between the component mounting (41) and an assigned operating device (19) is at least in certain areas arranged in a conveyor plane parallel to the plane of conveyance and/or intersects the plane of conveyance and/or overlaps the rotary worktable (14) at least almost completely.

5. Processing apparatus according to claim 2, 3 or 4, **characterised in that** the machine bed (2), in a cross-sectional plane aligned normal to the rotation axis (12), has at least in certain areas a circle segment shaped cross-section, in particular semicircular, and/or a maximum width of 2,4 m.

6. Processing apparatus according to claim 2, 3, 4 or 5, **characterised in that** the feed device (7) and/or the discharge device (47) have a rotary table with its axis of rotation (11) aligned parallel to the rotation axis (12) and to which holding fixtures (10) for container blanks (4) are attached, in particular in a star-shaped arrangement relative to the axis of rotation (11).

7. Processing apparatus according to any of the preceding claims, **characterised in that** the locating device (9) comprises a rotatably mounted locating mandrel (8) which is connected to an assigned drive unit (30) and is designed for rotation of container blanks (4) around a horizontally aligned longitudinal axis (13).

8. Processing apparatus according to claim 7, **characterised in that** the drive unit (30) of the locating device (9) is in the form of a direct drive, in particular an electric synchronous servomotor, and includes a drive shaft (38) connected to the locating mandrel (8) in one piece or via a clutch device (39), in particular a hollow shaft conical clutch.

9. Processing apparatus according to any of the preceding claims, **characterised in that** the rotary worktable (14) and the feed device (7) and/or the discharge device (47) are each assigned a drive unit for the provision of a rotary movement.

10. Processing apparatus according to claim 8, **characterised in that** the drive units are connected to a control unit (15) designed for independent, in particular synchronised, control of the rotary movements of the drive units.

11. Processing apparatus according to claim 7, 8, 9 or 10, **characterised in that** at least one drive unit (30) for a locating device (9) is assigned a power module (31) associated with the control unit (15) and mounted on the rotary worktable (14).

12. Processing apparatus according to claim 11, **characterised in that** the rotary worktable (14) is assigned a centrally located, multipole electrical rotary connection, which is designed to provide electrical supply energy and control signals from the control unit (15) to the power modules (31) of the locating devices (9).

13. Processing apparatus according to any of the preceding claims, **characterised in that** the operating devices (16 to 20) are designed to provide at least one of the functions of positioning, separating, joining, fitting, reshaping, pressing-in, monitoring, coating, drying, or surface activation.

## Revendications

1. Dispositif de traitement pour des ébauches de contenant (4), avec un banc de machine (2), un système d'amenée (7) pour une amenée d'ébauches de contenant (4), un système d'évacuation (47) pour une évacuation des ébauches de contenant (4), un plateau tournant pour pièces (14) monté de manière à pouvoir tourner et avec plusieurs systèmes de logement (9), qui sont réalisés pour une fixation temporaire d'ébauches de contenant (4) et pour un transport d'ébauches de contenant (4) le long d'un trajet de transport (46) en forme de tronçon de trajectoire circulaire entre le système d'amenée (7) et le système d'évacuation (47), dans lequel le trajet de transport (46) définit un premier tronçon de surface (43) en forme de segment circulaire, plusieurs systèmes de travail (16 à 20) faisant face au plateau tournant pour pièces (14) dans une direction radiale, lesquels sont réalisés afin de traiter des ébauches de contenant (4) logées au niveau du plateau tournant pour pièces (14), et au moins un système de convoyage (40), qui est réalisé pour un convoyage de composants d'ébauches de contenant (4) le long d'une ligne de convoyage (42) entre un logement de composant (41) et un système de travail (19) associé, dans lequel le logement de composant (41) du système de convoyage (40) est disposé dans un deuxième tronçon de surface (48) en forme de segment circulaire, lequel complète le premier segment de surface (43) défini par le trajet de transport (46) en forme de tronçon de trajectoire circulaire pour former un cercle entier.

2. Dispositif de traitement selon la revendication 1, **caractérisé en ce qu'**un axe de rotation (12) du plateau tournant pour pièce (14) est orienté dans une direction verticale.

3. Dispositif de traitement selon la revendication 2, **caractérisé en ce que** des axes longitudinaux (13) des systèmes de logement (9) installés au niveau du plateau tournant pour pièces (14) définissent au moins un plan de transport, réalisé de manière normale par rapport à l'axe de rotation (12), pour les ébauches de contenant (4).

4. Dispositif de traitement selon la revendication 3, **caractérisé en ce que** la ligne de convoyage (42) est disposée au moins par endroits dans un plan de convoyage disposé de manière parallèle par rapport au plan de transport entre le logement de composant (41) et un système de travail (19) associé, et/ou coupe le plan de transport et/ou surmonte au moins quasiment totalement le plateau tournant pour pièces (14).

5. Dispositif de traitement selon la revendication 2, 3 ou 4, **caractérisé en ce que** le banc de machine (2) présente, dans un plan de section transversale orientée de manière normale par rapport à l'axe de rotation (12), au moins par endroits une section transversale en forme de segment circulaire, en particulier en forme de demi-cercle, et/ou une largeur maximale de 2,4 m.

6. Dispositif de traitement selon la revendication 2, 3, 4 ou 5, **caractérisé en ce que** le système d'amenée (7) et/ou le système d'évacuation (47) présentent un plateau rotatif avec un axe de rotation (11) orienté de manière parallèle par rapport à l'axe de rotation (12), au niveau duquel sont installés des dispositifs de maintien (10) pour des ébauches de contenant (4), en particulier selon un agencement orienté de manière à présenter une forme d'étoile par rapport à l'axe de rotation (11).

7. Dispositif de traitement selon l'une quelconque des revendications précédentes, **caractérisé en ce que** le système de logement (9) comprend un mandrin de logement (8) monté de manière à pouvoir tourner, qui est relié à un système d'entraînement (30) associé et qui est réalisé pour une rotation d'ébauches de contenant (4) autour d'un axe longitudinal (13) orienté de manière horizontale.

8. Dispositif de traitement selon la revendication 7, **caractérisé en ce que** le système d'entraînement (30) du système de logement (9) est réalisé sous la forme d'un entraînement direct, en particulier sous la forme d'un servomoteur synchrone électrique et comprend un arbre d'entraînement (38), qui est relié au mandrin de logement (8) d'un seul tenant ou par l'intermédiaire d'un système de couplage (39), en particulier un couplage conique à tige creuse.

9. Dispositif de traitement selon l'une quelconque des revendications précédentes, **caractérisé en ce que** respectivement un système d'entraînement pour fournir un déplacement de rotation est associé au plateau tournant pour pièces (14) et au système d'amenée (7) et/ou au système d'évacuation (47).

10. Dispositif de traitement selon la revendication 8, **caractérisé en ce que** les systèmes d'entraînement sont reliés à un système de commande (15), qui est réalisé pour un pilotage indépendant, en particulier synchronisé, des déplacements de rotation des systèmes d'entraînement.

11. Dispositif de traitement selon la revendication 7, 8, 9 ou 10, **caractérisé en ce qu'**un module de puissance (31) associé au système de commande (15) est associé au moins à un système d'entraînement (30) pour un système de logement (9), lequel module de puissance est disposé au niveau du plateau tournant pour pièces (14).

12. Dispositif de traitement selon la revendication 11, **caractérisé en ce qu'**un raccord rotatif disposé au centre, électrique et multipolaire est associé au plateau tournant pour pièces (14), lequel est réalisé pour fournir une énergie électrique d'alimentation et des signaux de commande du système de commande (15) aux modules de puissance (31) des systèmes de logement (9).

13. Dispositif de traitement selon l'une quelconque des revendications précédentes, **caractérisé en ce que** les systèmes de travail (16 à 20) sont réalisés afin de fournir au moins une fonction issue du groupe comprenant le positionnement, la séparation, l'assemblage, le montage, la mise en forme, l'enfoncement, la surveillance, le revêtement, le séchage, l'activation de surfaces.
